# EUROPÄISCHE PATENTSCHRIFT

(11) **EP 4 015 421 B1**
(45) Veröffentlichungstag und Bekanntmachung des Hinweises auf die Patenterteilung: **26.02.2025**
(21) Anmeldenummer: 20020621.7
(22) Anmeldetag: 15.12.2020
(51) Int. Cl.: B65G 47/84, B65G 47/91

(54) **TRANSPORTEINRICHTUNG UND VERFAHREN ZUM BETREIBEN EINER TRANSPORTEINRICHTUNG**
TRANSPORT DEVICE AND METHOD FOR OPERATING A TRANSPORT DEVICE
DISPOSITIF DE TRANSPORT ET PROCÉDÉ DE FONCTIONNEMENT D'UN DISPOSITIF DE TRANSPORT

(43) Veröffentlichungstag der Anmeldung: 22.06.2022
(73) Patentinhaber: HINTERKOPF GmbH, 73054 Eislingen/Fils (DE)
(72) Erfinder: Osswald, Steffen, 73312 Geislingen (DE); Grieser, Alexander, 89558 Böhmenkirch (DE)
(74) Vertreter: Patentanwälte Magenbauer & Kollegen Partnerschaft mbB

(56) Entgegenhaltungen:
- EP-A1- 1 132 207
- EP-A1- 2 562 103
- EP-A1- 2 808 277
- EP-A1- 2 987 605
- EP-A1- 3 339 222
- CH-A5- 678 616
- DE-A1- 102012 101 076
- DE-A1- 102017 219 503
- DE-U1- 202012 009 837
- JP-A- 2013 071 828
- JP-A- H06 183 553
- JP-B2- 3 736 703
- US-A- 3 766 851
- US-A- 4 614 263
- US-A1- 2014 352 612
- US-B2- 8 016 583

## Beschreibung

Die Erfindung betrifft eine Transporteinrichtung zum Transportieren von kreiszylindrisch profilierten Werkstücken, mit einer drehbeweglich um eine Rotationsachse an einem Lagerzapfen gelagerten Ladetrommel, die an einer Außenoberfläche mit mehreren Ladeschlitten versehen ist, wobei jeder Ladeschlitten linearbeweglich längs der Rotationsachse an der Außenoberfläche aufgenommen ist und einen Werkstückhalter mit einer, insbesondere kreisabschnittsförmig, längs der Rotationsachse profilierten Vertiefung aufweist, wobei Profilachsen der Vertiefungen jeweils einen koaxial zur Rotationsachse angeordneten Umkreis schneiden. Ferner betrifft die Erfindung ein Verfahren zum Betreiben einer Transporteinrichtung.

Aus der DE 10 2012 101076 A1 ist eine Dosentransfervorrichtung für Dosen oder Dosenrohlinge zur Übergabe und/oder Übernahme von Dosen oder Dosenrohlingen in bzw. aus einer sich winklig, insbesondere senkrecht, zu einem Transportweg erstreckenden Übergabe- bzw. Übernahmeachse bekannt. Die Dosentransfereinrichtung weist mehrere entlang des Transportweges bewegbare Dosenaufnahmen auf, denen jeweils mindestens ein, mindestens eine Ansaugöffnung aufweisendes Ansaugelement zum saugenden Halten der Dosen oder Dosenrohlinge beim Transport entlang des Transportweges zugeordnet und/oder von der Dosenaufnahme gebildet wird, wobei vorgesehen ist, dass die Ansaugelemente, zumindest abschnittsweise, entlang der Übergabe- und/oder Übernahmeachse zwischen einer eingefahrenen und einer ausgefahrenen Position bewegbar ausgebildet und/oder angeordnet sind.

Die EP 2 987 605 A1 offenbart ein Transportsystem zum Transport von Kunststoffbehältern in einer Behälterbehandlungsanlage, mit wenigstens einer zum Transport eines Kunststoffbehälters in Förderrichtung verfahrbaren Behälteraufnahme, wobei die Behälteraufnahme wenigstens einen an die Behälterform angepassten Saugnapf zum Angriff und Halten des Kunststoffbehälters aufweist. Die EP 2 562 103 A1 offenbart die Merkmale der Oberbegriffe der Ansprüche 1 und 9.

Die Aufgabe der Erfindung besteht darin, eine Transporteinrichtung und ein Verfahren zum Betreiben einer Transporteinrichtung bereitzustellen, mit denen die Gefahr einer Beschädigung der Werkstücke während des Transportvorgangs reduziert wird.

Diese Aufgabe wird für eine Transporteinrichtung der eingangs genannten Art mit den Merkmalen des Anspruchs 1 gelöst. Hierbei ist vorgesehen, dass der Werkstückhalter entlang einer quer zur Rotationsachse ausgerichteten Radialrichtung zwischen einer radial innenliegenden ersten Funktionsstellung und einer radial außenliegenden zweiten Funktionsstellung linearbeweglich am Ladeschlitten aufgenommen ist.

Prinzipiell besteht die Aufgabe der an der Ladetrommel linearbeweglich aufgenommenen und jeweils mit einem Werkstückhalter versehenen Ladeschlitten darin, ein Werkstück von einem vorgelagerten Transportsystem, das für eine Werkstückzufuhr in getakteter Weise oder in kontinuierlicher Weise ausgebildet ist, aufzunehmen und/oder ein Werkstück an ein nachgelagertes Transportsystem, das für eine Werkstückabfuhr in getakteter Weise oder in kontinuierlicher Weise ausgebildet ist, abzugeben. Die Ladetrommel wird in diesem Zusammenhang auch als Transfersystem bezeichnet. Für einen solchen Werkstück-Aufnahmevorgang bzw. Werkstück-Abgabevorgang kann eine lineare Relativbewegung zwischen dem am Ladeschlitten im Werkstückhalter aufgenommenen Werkstück und dem vorgelagerten Transportsystem bzw. dem nachgelagerte Transportsystem erforderlich sein. Beispielhaft ist das Werkstück becherförmig ausgebildet, insbesondere handelt es sich bei dem Werkstück um einen Aerosoldosenrohling aus Metall oder um einen Tubenrohling aus Metall oder Kunststoff.

Exemplarisch kann davon ausgegangen werden, dass das Werkstück auf einen Dorn des vorgelagerten Transportsystems aufgeschoben oder in ein Spannfutter des vorgelagerten Transportsystems eingeschoben ist und somit für ein Aufnehmen des Werkstücks eine lineare Relativbewegung des Ladeschlittens und des Werkstückhalters gegenüber der Ladetrommel erforderlich ist, um das Werkstück vom vorgelagerten Transportsystem abzuziehen. Ergänzend oder alternativ kann vorgesehen sein, dass für eine Abgabe des Werkstücks an ein nachgelagertes Transportsystem ein Aufschieben des Werkstücks auf einen Dorn des nachgelagerten Transportsystems oder ein Einschieben des Werkstücks in ein Spannfutter des nachgelagerten Transportsystems vorgesehen ist und dementsprechend eine lineare Relativbewegung des Ladeschlittens und des Werkstückhalters gegenüber der Ladetrommel erforderlich ist.

Um einen möglichst schonenden Transport des Werkstücks zu gewährleisten und bei einem Aufnehmen bzw. Abgeben des Werkstücks größtmögliche Flexibilität sicherzustellen, ist der Werkstückhalter dazu ausgebildet, in Kontakt mit einer Außenoberfläche, insbesondere einer Außenumfangsfläche, des Werkstücks zu treten und, insbesondere unter Verwendung von Unterdruck oder Magnetkräften, eine Anhaftung des Werkstücks am Werkstückhalter zu gewährleisten. Hierbei wird davon ausgegangen, dass die Außenoberfläche des Werkstücks im Wesentlichen kreiszylindrisch ausgebildet ist und dass der Werkstückhalter eine auf die Außenoberfläche angepasste Aufnahmegeometrie aufweist.

Vorzugsweise ist die Aufnahmegeometrie zumindest geometrisch ähnlich, insbesondere geometrisch identisch, mit einem Teilbereich der Außenoberfläche des Werkstücks ausgebildet. Dies kann beispielhaft dadurch realisiert werden, dass der Werkstückhalter entlang einer parallel zur Rotationsachse der Ladetrommel ausgerichteten Profilachse eine Vertiefung mit einer zumindest abschnittsweise konstanten Profilierung aufweist. Rein exemplarisch kann vorgesehen sein, dass diese Profilierung in einer Querschnittsebene, die normal zur Rotationsachse ausgerichtet ist, als Kreisabschnitt ausgebildet ist. Hierbei entspricht ein Radius dieses Kreisabschnitts zumindest nahezu einem Radius der kreiszylindrischen Außenoberfläche des Werkstücks. Durch die zumindest weitgehende geometrische Identität zwischen einem Teilbereich der Außenoberfläche des Werkstücks und der Vertiefung im Werkstückhalter wird ein flächiger Kontakt zwischen Werkstückhalter und Werkstück ermöglicht, der beispielsweise eine Anhaftung des Werkstücks am Werkstückhalter unter Ausnutzung von Unterdruck und/oder von Magnetkräften erlaubt.

Um den Vorgang des Aufnehmens eines Werkstücks von einem vorgelagerten Transportsystem bzw. den Vorgang des Abgebens des Werkstücks an ein nachgelagertes Transportsystem zu unterstützen, ist zusätzlich vorgesehen, dass der Werkstückhalter in einer quer zur Rotationsachse der Ladetrommel ausgerichteten Radialrichtung eine lineare Relativbewegung gegenüber dem Ladeschlitten durchführen kann. Durch diese lineare Relativbewegung zwischen der ersten Funktionsstellung und der zweiten Funktionsstellung wird ein Abstand zwischen dem Werkstückhalter und dem Ladeschlitten bzw. der Rotationsachse der Ladetrommel beeinflusst. Diejenige Stellung, bei der ein minimaler Abstand zwischen Werkstückhalter und Ladeschlitten bzw. zwischen Werkstückhalter und Rotationsachse vorliegt, wird hierbei als erste Funktionsstellung bezeichnet. Diejenige Stellung, bei der ein maximaler Abstand zwischen Werkstückhalter und Ladeschlitten bzw. zwischen Werkstückhalter und Rotationsachse vorliegt, wird hierbei als zweite Funktionsstellung bezeichnet.

Beispielhaft wird davon ausgegangen, dass ein Bewegungshub zwischen der ersten Funktionsstellung und der zweiten Funktionsstellung kleiner als der Radius der Vertiefung im Werkstückhalter ausgebildet ist.

Durch diese Möglichkeit zur Veränderung des Abstands zwischen dem Werkstückhalter und der Rotationsachse wird beispielsweise ein Aufnehmen eines Werkstücks von einem vorgelagerten Transportsystem, bei dem das Werkstück in gleicher Weise wie an der Ladetrommel lediglich an seiner kreiszylindrischen Außenoberfläche gehalten wird, erleichtert. Hierbei ist vorgesehen, dass der Werkstückhalter in einer Übergabeposition oder Beladeposition zwischen dem vorgelagerten Transportsystem und der Ladetrommel in radialer Richtung an das vorgelagerte Transportsystem angenähert wird, um in der zweiten Funktionsstellung die Anhaftung des Werkstücks am Werkstückhalter herbeizuführen und anschließend in die erste Funktionsstellung zurückzukehren, um somit den Abstand zum vorgelagerten Transportsystem wieder zu vergrößern. Eine solche Vorgehensweise ist insbesondere dann von Interesse, wenn die Ladetrommel und das vorgelagerte Transportsystem unterschiedliche Fördergeschwindigkeiten aufweisen, da hiermit eine Kontaktzeit, in der das Werkstück sowohl in Kontakt mit dem vorgelagerten Transportsystem als auch mit dem Werkstückhalter steht, minimiert werden kann.

Dabei kann das vorgelagerte Transportsystem beispielsweise als Förderband, als Kettenförderer, als Werkstückrundtisch mit daran angebrachten Spannzangen oder Aufnahmedornen oder als Abzugstrommel in der Art der Ladetrommel ausgebildet sein. In gleicher Weise kann auch ein Abgeben des Werkstücks von der Ladetrommel an ein nachgelagertes Transportsystem durch die lineare Relativbewegung des Werkstückhalters gegenüber dem Ladeschlitten unterstützt werden.

Im Hinblick auf die Anordnung der Ladeschlitten mit den jeweils zugeordneten Werkstückhaltern an der Ladetrommel wird davon ausgegangen, dass die Profilachsen der Vertiefungen, die in den jeweiligen Werkstückhaltern ausgebildet sind, einen koaxial zur Rotationsachse ausgerichteten Umkreis schneiden, sofern sich die Werkstückhalter jeweils in der ersten Funktionsstellung befinden. Wird einer der Werkstückhalter aus der ersten Funktionsstellung in die zweite Funktionsstellung verlagert, so ist für diesen Werkstückhalter die Randbedingung, dass die Profilachse dieses Werkstückhalters den koaxial zur Rotationsachse angeordneten Umkreis schneidet, zeitweilig nicht gewährleistet.

Die für die Aufnahme von Werkstücken und für die Abgabe von Werkstücken mittels der Ladetrommel erforderliche Rotationsbewegung kann wahlweise als kontinuierliche Rotation oder als Drehschrittbewegung mit einer Abfolge von Drehschritten und Bewegungspausen durchgeführt werden.

Zweckmäßig ist es, wenn die Ladetrommel an der Außenoberfläche mit mehreren, jeweils parallel zur Rotationsachse ausgerichteten Linearführungen versehen ist und dass die Ladeschlitten den Linearführungen zugeordnet sind.

Die Aufgabe der Linearführung, die beispielsweise eine oder mehrere parallel zur Rotationsachse ausgerichtete Führungsstangen oder Führungsschienen oder ein parallel zur Rotationsachse erstrecktes Führungsprofil, insbesondere in der Art einer Schwalbenschwanzführung, aufweisen kann, liegt in erster Linie in der präzisen Führung des Ladeschlitten und des daran angebrachten Werkstückhalters parallel zur Rotationsachse. Die Lagerung des Ladeschlittens an der Linearführung kann als Gleitlagerung oder als Wälzlagerung oder als Kombination hiervon verwirklicht werden.

Zusätzlich zu den Führungsaufgaben kann vorgesehen sein, dass die Linearführung und der Ladeschlitten derart aufeinander angepasst sind, dass eine Bereitstellung von elektrischer Energie und/oder eines druckbeaufschlagten Fluids, insbesondere Druckluft und/oder von Unterdruck, von der Linearführung an den Ladeschlitten ermöglicht wird. Mit der bereitgestellten elektrischen Energie und/oder dem bereitgestellten druckbeaufschlagten Fluid kann beispielsweise die Verlagerung des Werkstückhalters zwischen der ersten Rotationsstellung und der zweiten Funktionsstellung bewirkt werden. Mit der Bereitstellung von Unterdruck an den Ladeschlitten kann unter der Voraussetzung einer geeigneten Kanalanordnung im Ladeschlitten sowie im Werkstückhalter eine Ansaugung des Werkstücks in die Vertiefung des Werkstückhalters verwirklicht werden. Ergänzend kann vorgesehen sein, dass an Ladeschlitten und/oder am Werkstückhalter ein Sensor angebracht ist, beispielsweise um das Vorhandensein eines Werkstücks zu erkennen. Sensorsignale dieses Sensors können vom Werkstückhalter oder Ladeschlitten über die Linearführung an die Ladetrommel und von dort an eine Auswerteeinrichtung weitergeleitet werden. Vorteilhaft ist es, wenn dem Ladeschlitten ein Aktor, insbesondere ein Pneumatikzylinder oder ein elektrischer Stellantrieb, zugeordnet ist, der zur Einleitung einer Relativbewegung zwischen Ladeschlitten und Werkstückhalter ausgebildet ist. Mit einem Aktor kann die Relativbewegung zwischen Werkstückhalter und Ladeschlitten sowohl im Hinblick auf den Zeitpunkt bzw. Ort, an dem diese Relativbewegung während einer Rotation oder eines Stillstands der Ladetrommel durchgeführt wird, vorgegeben und gegebenenfalls variiert werden. Zudem kann auch der Verlauf der Bewegung im Hinblick auf eine maximale Beschleunigung und/oder eine Bewegungsdauer vorgegeben und gegebenenfalls variiert werden. Der Aktor kann insbesondere als pneumatisch betriebener Kurzhubzylinder, als elektrisch betriebener Magnetantrieb oder als Elektromotor mit nachgeschaltetem Getriebe zur Umwandlung zur Rotationsbewegung in eine Linearbewegung ausgebildet sein. Vorzugsweise ist ein Aktorgehäuse des Aktors im Ladeschlitten aufgenommen und ein relativbeweglich am Aktorgehäuse gelagertes Stellelement steht mit dem Werkstückhalter in Wirkverbindung. Um eine vorteilhafte Führung des Werkstückhalters gegenüber dem Ladeschlitten bei der Radialbewegung zu gewährleisten können zusätzliche Führungsmittel vorgesehen sein, beispielsweise am Werkstückhalter ausgebildete Führungsstifte, die in korrespondierenden Führungsbohrungen im Ladeschlitten linearbeweglich gelagert sind.

Bei einer alternativen Ausführungsform ist vorgesehen, dass anstelle des Aktors eine am Lagerzapfen ausgebildete Steuernocke zur Beeinflussung der radialen Position des Werkstückhalters gegenüber dem Ladeschlitten ausgebildet ist.

Bei einer Weiterbildung der Erfindung ist vorgesehen, dass am Lagerzapfen, insbesondere in einem von der Ladetrommel begrenzten Innenraum, eine kreisrunde Führungskulisse festgelegt ist, die eine umlaufend zur Rotationsachse ausgerichtete Führungsbahn bestimmt und dass jeder Ladeschlitten einen radial nach innen gerichteten Führungszapfen aufweist, der für einen längs der Rotationsachse formschlüssigen Eingriff in die Führungskulisse ausgebildet ist, wobei die Führungskulisse eine Ausnehmung aufweist, die für eine Entkopplung des Führungszapfens aus der Führungskulisse an einer vorgegebenen Umfangsposition ausgebildet ist. Die Aufgabe der Führungskulisse besteht darin, eine Relativbewegung längs der Rotationsachse für den Ladeschlitten mit dem daran aufgenommenen Werkstückhalter gegenüber der jeweiligen Linearführung nur an, insbesondere genau einer, vorgegebenen Position(en), die der Ladeschlitten durch die Rotation der Ladetrommel um die Rotationsachse einnehmen kann, freizugeben.

Beispielhaft ist vorgesehen, dass der Ladeschlitten mit dem Werkstückhalter nur an einer Beladeposition, an der der Werkstückhalter, insbesondere mit minimalem Abstand, einem benachbart angeordneten, vorgelagerten Transportsystem gegenüberliegt und/oder an einer Entladeposition, an der der Werkstückhalter, insbesondere mit minimalem Abstand, einem benachbart angeordneten, nachgelagerten Transportsystem gegenüberliegt, eine Linearbewegung längs der Rotationsachse durchführen soll. In allen anderen Rotationsstellungen, die der jeweilige Ladeschlitten durch die Rotationsbewegung der Ladetrommel einnehmen kann, soll hingegen keine Linearbewegung des Ladeschlittens längs der Rotationsachse möglich sein. Dementsprechend kann die Führungskulisse beispielsweise an der Beladeposition und/oder an der Entladeposition mit einer Ausnehmung versehen sein, die ein Auskuppeln des am Ladeschlitten angebrachten und formschlüssig in die Führungskulisse eingreifenden Führungszapfens genau in dieser jeweiligen Position ermöglicht. Sofern die Linearbewegung des Ladeschlittens an der jeweiligen Belade- bzw. Entladeposition während eines Stillstands der Ladetrommel durchgeführt wird, ist es ausreichend, wenn die Ausnehmung in der Führungskulisse nur geringfügig größer als ein Querschnitt des Führungszapfens ausgebildet ist. Ist hingegen vorgesehen, dass die Linearbewegung des Ladeschlittens bereits vor Erreichen der jeweiligen Belade- bzw. Entladeposition begonnen werden soll und/oder erst nach Verlassen der jeweiligen Belade- bzw. Entladeposition beendet wird, muss die Ausnehmung in der Führungskulisse sich über denjenigen Winkelbereich erstrecken, über den der Ladeschlitten von der axialen Position, die von der Führungskulisse vorgegeben wird, abweichen kann.

Vorzugsweise ist die Führungskulisse derart beschaffen, dass die Ladeschlitten im Zuge der Rotation der Ladetrommel stets die gleiche axiale Position einnehmen. Alternativ kann auch vorgesehen sein, dass die Führungskulisse derart beschaffen ist, dass die Ladeschlitten im Zuge der Rotation der Ladetrommel auch eine axiale Verlagerung durchführen können, ohne dass hierfür die Führungswirkung durch die Führungskulisse aufgehoben wird.

Sofern bei einer alternativen Ausführungsform vorgesehen sein sollte, dass die Linearführung zusammen mit dem Ladeschlitten einen Linearantrieb ausbildet, der beispielsweise elektrisch angesteuert werden kann oder als Pneumatikzylinder ausgebildet ist, kann auf die Führungskulisse verzichtet werden und eine individuelle axiale Positionierung des jeweiligen Ladeschlittens verwirklicht werden.

Bei einer Ausgestaltung der Erfindung ist vorgesehen, dass der Lagerzapfen für die Ladetrommel gemeinsam mit einer Aufschiebeeinrichtung an einem Maschinengestell angeordnet ist und dass die Aufschiebeeinrichtung für eine Einleitung einer Linearbewegung längs der Rotationsachse auf jeweils einen Ladeschlitten ausgebildet ist. Beispielhaft umfasst die Aufschiebeeinrichtung einen Ausleger, der eine parallel zur Rotationsachse ausgerichtete Linearbewegung durchführen kann und der für eine zeitweilige mechanische Kopplung mit dem Ladeschlitten und/oder dem am Werkstückhalter aufgenommenen Werkstück ausgebildet ist. Hierdurch kann beispielsweise an einer Entladeposition der Ladeschlitten mit dem daran angebrachten Werkstückhalter und dem am Werkstückhalter aufgenommenen Werkstück an ein nachgelagertes Transportsystem angenähert werden, um dabei das Werkstück an das nachgelagertes Transportsystem zu übergeben. Beispielhaft kann vorgesehen sein, dass der Ausleger als Bestandteil des nachgelagerten Transportsystems ausgebildet ist und während einer Förderbewegung des nachgelagerten Transportsystems eine alternierende Hubbewegung längs der Rotationsachse durchführen kann, um eine synchronisierte Linearbewegung der Ladeschlitten zu bewirken.

Bevorzugt ist vorgesehen, dass die Aufschiebeeinrichtung eine Antriebseinrichtung, insbesondere einen Pneumatikzylinder oder einen elektrischen Stellantrieb, mit einem Antriebsgehäuse und einem beweglich, insbesondere linearbeweglich, am Antriebsgehäuse gelagerten Stellglied aufweist, wobei der quer zur Rotationsachse ausgerichtete Ausleger am Stellglied festgelegt ist und für eine Bewegungskopplung mit dem Werkstückhalter und für eine Bewegungseinleitung auf das Werkstück ausgebildet ist. Mit einer derartigen Gestaltung der Aufschiebeeinrichtung ist eine Einflussnahme auf die Linearbewegung des Ladeschlittens, des daran angebrachten Werkstückhalters und des daran aufgenommenen Werkstücks unabhängig von einer Förderbewegung eines vorgelagerten oder nachgelagerten Transportsystems durchführbar, insbesondere jedoch synchronisiert mit der jeweiligen Förderbewegung. Hierdurch wird eine vorteilhafte Anpassung der Linearbewegung des Ladeschlittens an die Erfordernisse des vorgelagerten oder nachgelagerten Transportsystems ermöglicht.

Prinzipiell wird davon ausgegangen, dass das Antriebsgehäuse der Antriebseinrichtung, die Bestandteil der Aufschiebeeinrichtung ist, am Maschinengestell angebracht ist, an dem auch der Lagerzapfen der Ladetrommel festgelegt ist. In diesem Fall führt das Stellglied der Antriebseinrichtung die lineare Relativbewegung durch, mit der der Ladeschlitten längs der Rotationsachse der Ladetrommel bewegt wird. Vorzugsweise wird eine Kraftübertragung vom Ausleger auf den Ladeschlitten und das Werkstück durch einen Formschluss zwischen dem Ausleger und dem Ladeschlitten und/oder dem Werkstück verwirklicht. Ergänzend oder alternativ kann auch eine kraftschlüssige Kraftübertragung oder gegebenenfalls die Nutzung von Magnetkräften oder Unterdruck für eine Kraftübertragung zwischen Ausleger, Ladeschlitten und Werkstück genutzt werden. Vorteilhaft ist es, wenn der Ladetrommel eine Druckluftversorgung und/oder eine Stromversorgung und/oder eine Vakuumversorgung für eine Bewegung des Ladeschlittens längs der Rotationsachse und/oder für eine zeitweilige Anhaftung von Werkstücken an den Werkstückhaltern zugeordnet ist. Besonders vorteilhaft ist es, wenn am Lagerzapfen für die Ladetrommel und/oder an einer dem Maschinengestell abgewandten Stirnseite der Ladetrommel eine Drehdurchführung für die Druckluftversorgung und/oder Stromversorgung und/oder Vakuumversorgung der an der Ladetrommel ausgebildeten Komponenten angeordnet ist.

Erfindungsgemäß ist vorgesehen, dass benachbart zur Ladetrommel ein Transportsystem angeordnet ist.

Erfindungsgemäß weist das Transportsystem einen Werkstückrundtisch auf, der drehbeweglich um eine Drehachse am Maschinengestell gelagert ist. Hierbei sind an einer Vorderseite des Werkstückrundtischs mehrere, insbesondere in gleicher Teilung auf einem koaxial zur Drehachse angeordneten Teilkreis angeordnete, Aufnahmedorne vorgesehen, wobei wenigstens einem Aufnahmedorn eine Düseneinrichtung zur Bereitstellung von Druckluft an einer Oberfläche des Aufnahmedorns zugeordnet ist. Während die Kettenstäbe eines Kettenförderers jeweils einen Außendurchmesser aufweisen, der erheblich kleiner als ein Innendurchmesser der Ausnehmung des hülsenförmig ausgebildeten Werkstücks ist, entspricht ein Außendurchmesser der Aufnahmedorne zumindest im Wesentlichen den Innendurchmesser des Werkstücks. Hiermit wird eine präzise Führung des Werkstücks sowie eine Einleitung eines Drehmoments auf das Werkstück ermöglicht, was beispielsweise für die Durchführung eines Druckvorgangs, insbesondere bei Verwendung eines Siebdruckverfahrens oder eines Offset-Druckverfahrens, von Bedeutung ist. Angesichts der vorzugsweise als Spielpassung oder Übergangspassung aneinander angepassten Durchmesser (Außendurchmesser des Aufnahmedorns und Innendurchmesser des Werkstücks) ist es für ein Aufschieben des Werkstücks auf den Aufnahmedorn vorteilhaft, wenn zumindest zeitweilig während der Durchführung des Aufschiebevorgangs ein Luftpolster zwischen Werkstück und Aufnahmedorn ausgebildet wird. Dies kann beispielsweise durch Bereitstellung eines Luftstroms in den Spalt zwischen Werkstück und Aufnahmedorn mittels einer geeigneten Düseneinrichtung verwirklicht werden, die am Maschinengestell oder am Werkstückrundtisch angebracht ist. Alternativ ist vorgesehen, dass im Aufnahmedorn ein Fluidkanal ausgebildet ist, der wenigstens eine an einer kreiszylindrischen Außenoberfläche des Aufnahmedorns ausmündende Düsenöffnung aufweist, so dass eine Bereitstellung von Druckluft unmittelbar im Spalt zwischen der Außenoberfläche des Aufnahmedorns und der Innenoberfläche des Werkstücks vorgenommen werden kann. Vorzugsweise ist vorgesehen, dass der Luftstrom ausschließlich während der Durchführung des Aufschiebevorgangs zur Verfügung gestellt wird und insbesondere bereits vor vollständiger Beendigung des Aufschiebevorgangs abgeschaltet wird, um eine unerwünschte Verschiebung des Werkstücks zu vermeiden und den Druckluftverbrauch zu begrenzen.

Ferner ist erfindungsgemäß vorgesehen, dass an einer der Vorderseite abgewandten Rückseite des Werkstückrundtischs ein erstes Kupplungsteil einer Druckluftkupplung angeordnet ist, das über eine Druckluftleitung mit der Düseneinrichtung verbunden ist und dass am Maschinengestell ein Aktor angebracht ist, der ein Aktorgehäuse und ein linearbeweglich am Aktorgehäuse gelagertes Aktorelement aufweist, wobei eine Bewegungsachse des Aktorelements parallel zur Rotationsachse ausgerichtet ist und wobei am Aktorelement ein zweites Kupplungsteil der Druckluftkupplung angeordnet ist, das mit einer Druckluftquelle verbindbar ist und das in einer Funktionsposition für eine Druckluftverbindung mit der Düseneinrichtung ausgebildet ist. Die Aufgabe der Druckluftkupplung, die aus dem ersten Kupplungsteil am Werkstückrundtisch und dem zweiten Kupplungsteil am Aktorelement des Aktors gebildet wird, besteht darin, zeitweilig eine fluiddichte Kopplung zwischen einer Fluidleitung, die mit einer abseits des Maschinengestells angeordneten Druckluftquelle verbunden ist und der Düseneinrichtung zu schaffen. Vorzugsweise ist vorgesehen, dass in der Fluidleitung eine Ventileinrichtung angeordnet ist, die eine Einflussnahme auf den Fluidstrom zwischen der Druckluftquelle und der Düseneinrichtung ermöglicht. Beispielhaft ist vorgesehen, dass der Aktor mit dem zweiten Kupplungsteil derart gegenüber dem Werkstückrundtisch angeordnet ist, das lediglich in einer Beladeposition, an der eine Zuführung eines Werkstücks auf den jeweiligen Aufnahmedorn des Werkstückrundtischs durchgeführt wird, auch eine Druckluftbereitstellung über die Druckluftkupplung vorgenommen wird. Um eine fluiddichte Kopplung zwischen dem ersten Kupplungsteil und dem zweiten Kupplungsteil zu bewirken ist es vorgesehen, dass das zweite Kupplungsteil eine Linearbewegung parallel zur Rotationsachse der Ladetrommel und parallel zur Drehachse des Werkstückrundtischs durchführt und im Zuge einer Annäherung an das erste Kupplungsteil die gewünschte fluiddichte Kopplung hergestellt wird. Alternativ erfolgt eine Bereitstellung der Druckluft durch eine in radialer Richtung arbeitende Druckluftkupplung, die an einer Außenumfangsfläche des Werkstückrundtischs angeordnet ist.

Die Aufgabe der Erfindung wird für ein Verfahren zum Transportieren von kreiszylindrisch profilierten Werkstücken mit den nachfolgenden Schritten gelöst: Rotieren einer Ladetrommel, die an einer Außenoberfläche mit einem Ladeschlitten versehen ist, um eine Rotationsachse in eine Beladeposition für den Ladeschlitten, Bereitstellen eines Werkstücks von einem vorgelagerten Transportsystem an den Ladeschlitten und Anhaften des Werkstücks an einem Werkstückhalter des Ladeschlittens, Rotieren der Ladetrommel in eine Entladeposition für den Ladeschlitten und Übergeben des Werkstücks vom Werkstückhalter des Ladeschlittens an ein nachgelagertes Transportsystem, wobei der Werkstückhalter beweglich am Ladeschlitten angebracht ist und wobei in der Beladeposition und/oder in der Entladeposition eine Relativbewegung des Werkstückhalters in einer quer zur Rotationsachse ausgerichteten Radialrichtung durchgeführt wird, um einen Abstand zwischen Werkstückhalter und Rotationsachse zu verändern.

Erfindungsgemäß ist vorgesehen, dass das Werkstück an der Entladeposition durch eine Linearbewegung des Werkstückhalters parallel zur Rotationsachse auf einen parallel zur Rotationsachse ausgerichteten Aufnahmedorn eines Werkstückrundtischs aufgeschoben wird und dass während der Durchführung des Aufschiebevorgangs eine Relativbewegung des Werkstückhalters in der Radialrichtung durchgeführt wird, um den Abstand des Werkstückhalters von der Rotationsachse zu verkleinern.

Ferner ist erfindungsgemäß vorgesehen, dass während der Durchführung des Aufschiebevorgangs eine Bereitstellung von Druckluft an einer Oberfläche des Aufnahmedorns vorgenommen wird.

Vorzugsweise ist bei dem Verfahren vorgesehen, dass die Relativbewegung des Werkstückhalters in der Radialrichtung zur Verkleinerung des Abstands des Werkstückhalters von der Rotationsachse durchgeführt wird, wenn eine vorgegebene Überdeckung zwischen dem Werkstück und dem Aufnahmedorn vorliegt und/oder dass vor dem Zeitpunkt oder zum Zeitpunkt der Relativbewegung des Werkstückhalters in der Radialrichtung zur Verkleinerung des Abstands des Werkstückhalters von der Rotationsachse eine Bereitstellung von Druckluft an die Werkstückaufnahme vorgenommen wird.

Bei einer vorteilhaften Weiterbildung des Verfahrens ist vorgesehen, dass an der Beladeposition für die Aufnahme des Werkstücks in den Werkstückhalter eine erste Relativbewegung des Werkstückhalters in der Radialrichtung durchgeführt wird, um den Abstand des Werkstückhalters von der Rotationsachse zu vergrößern und anschließend eine zweite Relativbewegung des Werkstückhalters in der Radialrichtung durchgeführt wird, um den Abstand des Werkstückhalters von der Rotationsachse zu verkleinern.

Eine vorteilhafte Ausführungsform der Erfindung ist in der Zeichnung dargestellt. Hierbei zeigt:
- Figur 1: eine stark schematisierte Vorderansicht auf eine Transporteinrichtung mit einer teilweise geschnittenen Ladetrommel, die zwischen einem vorgelagerten Transportsystem und einem nachgelagerten Transportsystem angeordnet ist,
- Figur 2: eine stark schematisierte, teilweise geschnittene Draufsicht auf die Transporteinrichtung gemäß der Figur 1, und
- Figur 3: eine geschnittene Detaildarstellung des Ladeschlittens gemäß der Figur 2.

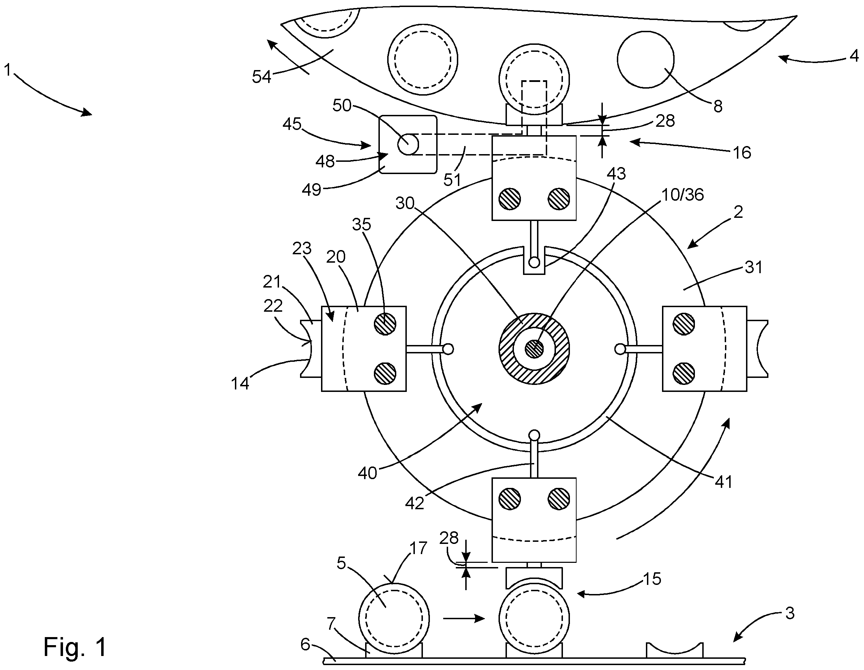

Eine in der Figur 1 nur stark schematisiert, ausschnittartig und keinesfalls maßstäblich gezeigte Transporteinrichtung 1 umfasst eine Ladetrommel 2, ein Förderband 3 und einen Werkstückrundtisch 4. Die Transporteinrichtung 1 ist zur Förderung von Werkstücken 5 mit kreiszylindrischer Geometrie ausgebildet, wobei die Werkstücke 5 rein exemplarisch als Hohlzylinder mit einem endseitig angebrachte Boden verwirklicht sind und beispielsweise als ein Aerosoldosenrohlinge aus Aluminium oder Stahl oder als Tubenrohlinge aus Kunststoff oder einer Metalllegierung hergestellt sind.

Das auch als vorgelagertes Transportsystem bezeichnete Förderband 3, das nur ausschnittweise gezeigt ist, weist ein flexibles Band 6 mit daran angebrachten Werkstückaufnahmen 7 auf, in die die Werkstücke 5 eingelegt werden können.

Die Aufgabe der Ladetrommel 2 besteht nunmehr darin, die in den Werkstückaufnahmen 7 des Förderbands 3 liegenden Werkstücke 5 aufzunehmen und im Zuge einer Rotationsbewegung um eine quer zur Darstellungsebene der Figur 1 ausgerichtete Rotationsachse 10 an den Werkstückrundtisch 4, der auch als nachgelagertes Transportsystem bezeichnet werden kann, bereitzustellen. An dem nur ausschnittartig in der Figur 1 gezeigten Werkstückrundtisch 4 sind, vorzugsweise in gleicher Winkelteilung, angeordnete Aufnahmedorne 8 angebracht. Die Aufnahmedorne 8 sind jeweils kreiszylindrisch ausgebildet, wobei Mittelachsen 9 der Aufnahmedorne 8 jeweils parallel zur Rotationsachse 10 der Ladetrommel 2 sowie parallel zu einer Drehachse 11 des Werkstückrundtischs 4 ausgerichtet sind.

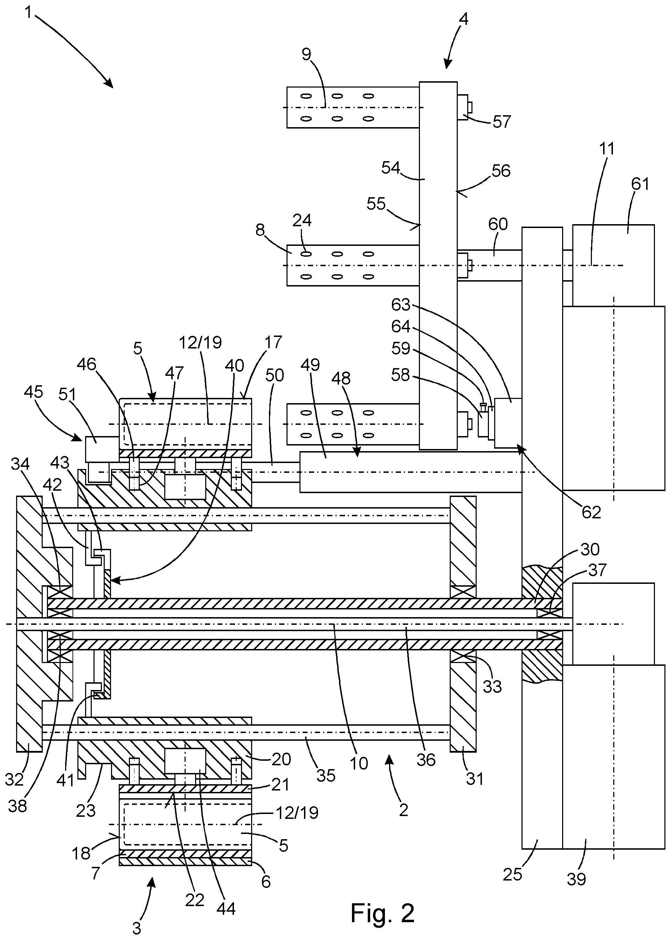

Wie den Darstellungen der Figuren 1 und 2 entnommen werden kann, findet der Transport der Werkstücke 5 mittels der Transporteinrichtung 1 rein exemplarisch in einer Weise statt, dass eine räumliche Orientierung von Rotationssymmetrieachsen 12 der Werkstücke 5 bei der Durchführung des Transportvorgangs nicht verändert wird, so dass die Rotationssymmetrieachsen 12 der Werkstücke 5 stets parallel zur Rotationsachse 10 und zur Drehachse 11 ausgerichtet sind.

Für den Transport der Werkstücke 5 ist vorgesehen, dass die zunächst in den Werkstückaufnahmen 7 des Förderbands 3 aufgenommenen Werkstücke 5 an einer Beladeposition 15 von der Ladetrommel 2 aufgenommen werden und anschließend im Zuge einer Rotationsbewegung der Ladetrommel 2 um die Rotationsachse 10 an einer Entladeposition 16 an den Werkstückrundtisch 4 übergeben werden.

Um ein Aufnehmen der Werkstücke 5 an der Beladeposition 15 zu ermöglichen und unerwünschte Relativbewegungen zwischen Werkstück 5, Werkstückaufnahme 7 sowie der Ladetrommel 2 zu verhindern sind die Ladeschlitten 20 und jeweils zugehörige Werkstückhalter 21 der Ladetrommel 2 derart ausgebildet, dass der Werkstückhalter 21 bei Erreichen der Beladeposition 15 aus einer ersten Funktionsstellung, die der Werkstückhalter 21 abseits der Beladeposition 15 und der Entladeposition 16 einnimmt, in eine zweite Funktionsstellung gebracht werden kann. In der zweiten Funktionsstellung weist der Werkstückhalter 21 einen vergrößerten Abstand 28 gegenüber dem Ladeschlitten 20 und damit auch gegenüber der Rotationsachse 10 auf .

Wie der Darstellung der Figur 1 entnommen werden kann, wird der Werkstückhalter 21 an der Beladeposition 15 aus der ersten Funktionsstellung in die zweite Funktionsstellung überführt. Gemäß der Darstellung der Figur 1 nimmt der Werkstückhalter 21 gerade eine Zwischenstellung ein, in der der Abstand 28 noch nicht den konstruktiv festgelegten Maximalwert aufweist und in der noch kein Kontakt mit der rein exemplarisch kreiszylindrisch ausgebildeten Außenoberfläche 17 des Werkstücks 5 vorliegt.

Für ein Aufnehmen des Werkstücks 5 ist vorzugsweise vorgesehen, dass der Werkstückhalter 21 eine längs einer Profilachse 19 parallel zur Rotationsachse 10 kreisabschnittsförmig profilierte Vertiefung 14 aufweist. Diese Vertiefung 14 bildet eine konkave Kontaktfläche 22 aus, die mit Unterdruck beaufschlagt werden kann, womit eine Anhaftung des Werkstücks 5 am Werkstückhalter 21 bewirkt wird, sobald ein zumindest weitestgehender flächiger Kontakt zwischen der Kontaktfläche 22 und der Außenoberfläche 17 des Werkstücks 5 gegeben ist. Anschließend erfolgt eine Verlagerung des Werkstückhalters 21 mit dem daran aufgenommenen Werkstück 5 in radialer Richtung nach innen, so dass das Werkstück 5 von der Werkstückaufnahme 7 abgehoben wird und bei einer nachfolgenden Rotationsbewegung der Ladetrommel 2 keine unerwünschte Relativbewegung zwischen Werkstück 5 und der Werkstückaufnahme 7 des Förderbands 3 eintreten kann.

Anschließend erfolgt eine Rotation der Ladetrommel 2, um das vom Förderband 3 aufgenommene Werkstück 5 an die Entladeposition 16 zu transportieren und dort auf den Aufnahmedorn 8 des Werkstückrundtischs 4 aufzuschieben. Beispielhaft kann der Werkstückrundtisch 4 als Bestandteil einer nicht näher dargestellten Bearbeitungsmaschine wie beispielsweise einer Druckmaschine zur Bedruckung der Außenoberfläche 17 des Werkstücks 5 ausgebildet sein. Für die Übergabe des Werkstücks 5 von der Ladetrommel 2 an den Aufnahmedorn 8 des Werkstückrundtischs 4 ist eine Linearbewegung des Ladeschlittens 20 mit dem daran angebrachten Werkstückhalter 21 und dem daran aufgenommenen Werkstück 5 parallel zur Rotationsachse 10 vorgesehen. Ferner kann vorgesehen sein, dass während der Durchführung des Aufschiebevorgangs für das Werkstück 5 auf den Aufnahmedorn 8 zur Vermeidung von unerwünschten Relativbewegungen zwischen Werkstückhalter 21 und Werkstück 5 eine in radialer Richtung nach innen gerichtete Rückzugsbewegung des Werkstückhalters 21 vorgenommen wird, in deren Zuge auch eine Abschaltung des an der Kontaktfläche 22 bereitgestellten Unterdrucks vorgenommen wird.

Vorzugsweise ist vorgesehen, dass das Förderband 3 eine kontinuierliche Förderbewegung durchführt, während die Ladetrommel 2 und der Werkstückrundtisch 4 jeweils synchron zueinander stattfindende Drehschrittbewegungen durchführen, die auch als intermittierende Drehbewegungen bezeichnet werden können.

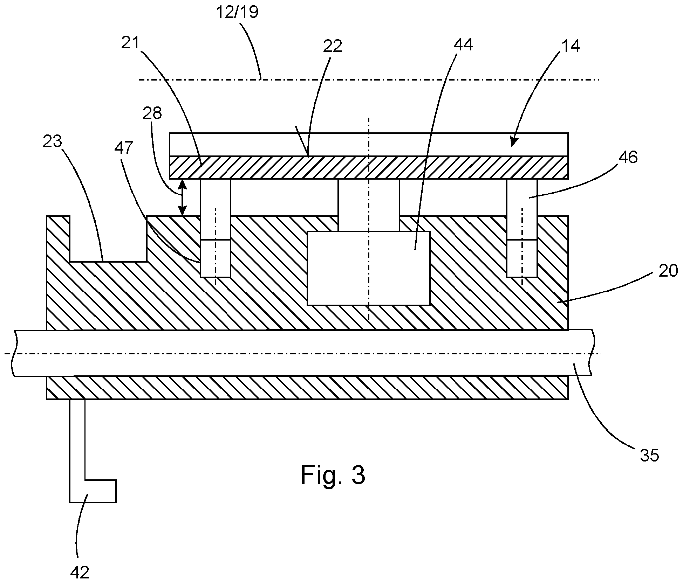

In der ebenfalls rein schematischen und keinesfalls maßstäblichen Darstellung der Figur 2 in ist insbesondere der innere Aufbau der Ladetrommel 2 näher dargestellt. Die Figur 3 enthält eine vergrößerte Darstellung des in der Figur 2 als Bestandteil der Ladetrommel 2 gezeigten Ladeschlittens 20 und des daran angebrachten Werkstückhalters 21.

Rein exemplarisch sind gemäß der Darstellung der Figur 2 ein Lagerzapfen 30 der Ladetrommel 2 ortsfest sowie eine Antriebswelle 60 des Werkstückrundtischs 4 drehbeweglich an einem gemeinsamen Maschinengestell 25 aufgenommen. Dies gilt jedoch nur zur Verdeutlichung des Kraftflusses zwischen der Ladetrommel 2 und dem Werkstückrundtisch 4, in der Praxis ist davon auszugehen, dass die Ladetrommel 2 an einem ersten Maschinengestell angebracht ist und dass der Werkstückrundtisch 4 an einem zweiten Maschinengestell angebracht ist, die entweder auf einem gemeinsamen Hallenboden einer Werkhalle stehen oder gegebenenfalls auch direkt miteinander verbunden sind.

Der Lagerzapfen 30 ist rein exemplarisch rohrförmig ausgebildet und fest mit dem Maschinengestell 25 verbunden. Die Ladetrommel 2 weist eine erste Trommelscheibe 31 sowie eine zweite Trommelscheibe 32 auf, die jeweils über symbolisch dargestellte erste und zweite Kugellager 33, 34 drehbeweglich am Lagerzapfen 30 gelagert sind. Die erste Trommelscheibe 31 und die zweite Trommelscheibe 32 sind über Führungsstangen 33 formstabil und drehfest miteinander verbunden, wobei gemäß der Darstellung der Figur 1 jedem Ladeschlitten 20 zwei als Linearführung dienende Führungsstangen 35 zugeordnet sind. Die Anzahl der Ladeschlitten 20 und der korrespondierenden Führungsstangen 35 kann nach Bedarf gewählt werden. Ferner verläuft im Inneren des Lagerzapfens 30 eine Antriebswelle 36, die gegenüber dem Lagerzapfen 30 mittels erster und zweiter Kugellager 37, 38 drehbeweglich gelagert ist. Die Antriebswelle 36 verbindet eine nicht näher dargestellte Antriebswelle eines Getriebemotors 39, der am Maschinengestell 25 festgelegt ist, mit der zweiten Trommelscheibe 32. Hierzu ist die Antriebswelle 36 drehfest mit der zweiten Trommelscheiben 32 verbunden. Dementsprechend vollzieht die Ladetrommel 2 bei einer geeigneten Ansteuerung des Getriebemotors 39, der insbesondere einen Elektromotor, insbesondere einen Servomotor, aufweisen kann, eine Rotationsbewegung um die Rotationsachse 10.

Prinzipiell sind die Ladeschlitten 20 längs der Führungsstangen 35, die sich parallel zur Rotationsachse 10 erstrecken, frei beweglich. Um jedoch eine eindeutige axiale Positionierung für die Ladeschlitten 20 zu gewährleisten, ist am Lagerzapfen 30 eine rotationssymmetrisch zur Rotationsachse 10 ausgebildete Führungskulisse 40 drehfest angebracht. Beispielhaft ist eine Profilierung der Führungskulisse 40 derart gestaltet, dass die Führungskulisse 40 als Kreisscheibe mit einem in axialer Richtung erstreckten Ringbund 41 ausgebildet ist. An jedem der Ladeschlitten 20 ist ein in radialer Richtung nach innen erstreckter Führungszapfen 42 ausgebildet, der sich in radialer Richtung nach innen über den Ringbund 41 erstreckt und der bezogen auf die Rotationsachse 10 eine formschlüssige Kopplung mit der Führungskulisse 40 eingeht. Hingegen wird durch diese geometrische Gestaltung der Führungskulisse 40 und des Führungszapfens 42 die rotatorische Bewegungsfreiheit der Ladetrommel 2 gegenüber der starr über den Lagerzapfen 30 mit dem Maschinengestell 25 verbundenen Führungskulisse 40 nicht beeinträchtigt.

Wie der Darstellung der Figur 1 entnommen werden kann, weist die Führungskulisse 40 eine Ausnehmung 43 auf, die derart ausgebildet ist, das die formschlüssige Kopplung zwischen dem Führungszapfen 42 und der Führungskulisse 40 an der Entladeposition 16 aufgehoben wird, wodurch an der Entladeposition 16 eine axiale Bewegung des Ladeschlittens 20 mit dem daran angebrachten Werkstückhalter 21 und dem daran aufgenommenen Werkstück 5 ermöglicht wird.

Wie aus den Darstellungen der Figuren 1 und 2 weiter entnommen werden kann, sind die Ladetrommel 2 mit den Ladeschlitten 20 und der Werkstückrundtisch 4 mit den daran angebrachten Aufnahmedornen 8 derart aufeinander abgestimmt, dass für einen Aufschiebevorgang des Werkstücks 5 auf den Aufnahmedorn 8, der eine koaxiale Ausrichtung des Werkstücks 5 gegenüber dem Aufnahmedorn 8 erfordert, eine radiale Relativbewegung des Werkstückhalters 21 aus der ersten Funktionsstellung in die zweite Funktionsstellung vorgenommen wird. Diese radiale Relativbewegung wird durch einen im Ladeschlitten 20 integriert angeordneten Aktor 44, der insbesondere als pneumatischer Kurzhubzylinder ausgebildet sein kann, hervorgerufen. Hierzu ist der Aktor 44 nicht näher dargestellter Weise mit einer ebenfalls nicht dargestellten, Maschinengestell 25 angebrachten Druckluftquelle verbunden, wobei zwischen Druckluftquelle und Aktor 44 ein ebenfalls nicht dargestelltes Schaltventil angeordnet ist, mit dem die Freigabe von Druckluft zur Überführung des Aktors 44 aus der ersten Funktionsstellung in die zweite Funktionsstellung bewirkt wird.

Beispielhaft ist der Aktor 44 als einfachwirkender Pneumatikzylinder mit einer nicht näher dargestellten Rückstelleinrichtung, insbesondere einer Wendelfeder, ausgerüstet, so dass bei Abschaltung der Druckluftversorgung und Entlüftung des Aktors 44 eine automatische Rückstellung des Werkstückhalters 21 aus der zweiten Funktionsstellung in die erste Funktionsstellung durchgeführt wird.

Um eine zuverlässige Führung des Werkstückhalters 21 gegenüber dem Ladeschlitten 20 zu gewährleisten, sind am Werkstückhalter 21 rein exemplarisch zwei Führungsstifte 46 festgelegt, die gleitbeweglich in korrespondierenden Führungsbohrung 47 des Ladeschlittens 20 aufgenommen sind.

Zur Einleitung einer Linearbewegung auf den Ladeschlitten 20 und zum Aufschieben des Werkstücks 5 auf den Aufnahmedorn 8 ist eine Aufschiebeeinrichtung 45 vorgesehen, die rein exemplarisch am Maschinengestell 25 festgelegt ist. Beispielhaft handelt es sich bei der Aufschiebeeinrichtung 45 um eine Baugruppe, die einen Pneumatikzylinder 48 mit einem Zylindergehäuse 49 und einer linearbeweglich im Zylindergehäuse 49 aufgenommenen Kolbenstange 50 sowie einen an der Kolbenstange endseitig angebrachten Ausleger 51 aufweist. Das Zylindergehäuse 49 ist am Maschinengestell 25 festgelegt, eine pneumatische Versorgung des Pneumatikzylinder 48, insbesondere als doppeltwirkender Pneumatikzylinder ausgebildet ist, erfolgt über eine nicht dargestellte Druckluftquelle mit nachgeschalteter Ventileinrichtung. Der Ausleger 51 ist dazu vorgesehen, einerseits in eine Ausnehmung 23 des Ladeschlittens 20 einzugreifen, um eine Einleitung der axialen Linearbewegung auf den Ladeschlitten 20 zu ermöglichen. Andererseits ist der Ausleger 51 derart ausgebildet, dass er auch an einem Bodenbereich 18 des Werkstücks 5 anliegt, um die zur Durchführung des Aufschiebevorgangs für das Werkstück 5 auf den Aufnahmedorn 8 erforderliche Axialkraft übertragen zu können.

Der in der Figur 2 schematisch dargestellte Werkstückrundtisch 4 umfasst rein exemplarisch eine kreisscheibenförmig ausgebildete Grundplatte 54, die an einer Vorderseite 55 mit den Aufnahmedornen 8 versehen ist. Die Grundplatte 54 ist drehfest mit der Antriebswelle 60 verbunden, die ihrerseits in nicht näher dargestellter Weise drehbeweglich im Maschinengestell 25 gelagert ist. Ferner ist die Antriebswelle mit einem Getriebemotor 61 verbunden, der zur Einleitung einer Rotationsbewegung für den Werkstückrundtisch 4 um die Drehachse 11 ausgebildet ist. Beispielhaft sind an einer Rückseite 56 der Grundplatte 54 jeweils koaxial zu den Aufnahmedornen 8 erste Kupplungsteile 57 angebracht, die für eine fluiddichte Verbindung mit einem zweiten Kupplungsteil 58 ausgebildet sind, das endseitig an einem Aktor 62 angebracht ist. Der Aktor 62, bei dem es sich insbesondere um einen pneumatischen Kurzhubzylinder handeln kann, umfasst ein am Maschinengestell 25 festgelegtes Aktorgehäuse 63 und eine linearbeweglich im Aktorgehäuse gelagerte Kolbenstange 64, an der das zweite Kupplungsteil 58 endseitig angebracht ist. Das nicht näher dargestellte Getriebe des Getriebmotors 61 kann als Rädergetriebe oder als Schrittschaltgetriebe ausgebildet sein.

Bei geeigneter Druckluftbeaufschlagung kann der insbesondere als doppeltwirkender Pneumatikzylinder ausgebildete Aktor 62 wahlweise eine Annäherungsbewegung oder eine Entfernungsbewegung relativ zum ersten Kupplungsteil 57 durchführen. Im Zuge der Annäherungsbewegung des zweiten Kupplungsteils 58 an das erste Kupplungsteil 57 findet eine fluiddichte Kopplung zwischen dem ersten Kupplungsteil 57 und dem zweiten Kupplungsteil 58 statt, so dass Druckluft, die an einem Druckluftanschluss 59 des zweiten Kupplungsteil 58 bereitgestellt werden kann, an das erste Kupplungsteil 57 und von dort aus an einem abschnittsweise durch den Aufnahmedorn 8 erstreckten Fluidkanal bereitgestellt werden kann. Ausgehend vom nicht näher dargestellten Fluidkanal erstrecken sich mehrere Radialkanäle im Aufnahmedorn 8, die an Mündungsöffnungen 24 des Aufnahmedorns 8 ausmünden. Beispielhaft ist vorgesehen, dass während der Durchführung eines Aufschiebevorgangs für das Werkstück 5 auf den Aufnahmedorn 8 eine Druckluftversorgung für den Aufnahmedorn 8 durchgeführt wird, um ein Aufschieben des Werkstücks 5 auf den Aufnahmedorn 8 durch einen Luftfilm zu unterstützen.

Die auf die Aufnahmedorne 8 aufgeschobenen Werkstücke 5 können anschließend im Zuge einer Drehschrittbewegung des Werkstückrundtischs 4 einer weiteren Bearbeitung durch nicht näher dargestellte Bearbeitungsstationen zugeführt werden und anschließend durch Komponenten einer weiteren, nicht näher dargestellten Transporteinrichtung wieder von den Aufnahmedornen entfernt werden.

Eine Funktionsweise der Transporteinrichtung 1 gemäß den Figuren 1 bis 3 kann wie folgt beschrieben werden:
Die Werkstücke 5 werden zunächst mit Hilfe des Förderbands 3 an die Beladeposition 15 transportiert, wobei davon ausgegangen wird, dass das Förderband 3 eine kontinuierliche Förderbewegung durchführt. Hingegen ist für die Durchführung des Aufschiebevorgangs für die Werkstücke 5, der an der Entladeposition 16 vorgesehen ist, ein zeitweiliger Stillstand für die Rotationsbewegungen der Ladetrommel 2 und des Werkstückrundtischs 4 vorzusehen, so dass sowohl die Ladetrommel 2 als auch der Werkstückrundtisch 4 jeweils Drehschrittbewegungen durchführen, die vorzugsweise synchronisiert zueinander ablaufen.

Dementsprechend ist davon auszugehen, dass beim Aufnehmen des Werkstücks 5 in den jeweiligen Werkstückhalter 21 eine Relativbewegung zwischen dem kontinuierlich weiter bewegten Förderband 3 und dem Werkstückhalter 21 stattfindet, da die Ladetrommel 2 zu diesem Zeitpunkt keine Drehschrittbewegung durchführt, sondern in Ruhe ist. Eine unerwünschte Relativbewegung zwischen den Werkstückaufnahmen 7 des Förderbands 3, dem Werkstück 5 und dem Werkstückhalter 21 kann dennoch vermieden werden, da der Werkstückhalter 21 durch entsprechende Ansteuerung des Aktors 44 kurzzeitig in radialer Richtung nach außen aus der ersten Funktionsstellung in die zweite Funktionsstellung überführt werden kann und dabei das Werkstück 5 rasch aufnehmen kann. Hierzu ist vorgesehen, die Kontaktfläche 22 am Werkstückhalter 21 mit Unterdruck zu beaufschlagen, so dass möglicherweise bereits vor einem vollständigen flächigen Kontakt zwischen der Außenoberfläche 17 des Werkstücks 5 und der Kontaktfläche 22 angesichts des typischerweise eher geringen Gewichts des Werkstücks 5 ein Abheben von der Werkstückaufnahme 7 erfolgt.

Anschließend erfolgt eine Überführung des an der Beladeposition 15 aufgenommenen Werkstücks 5 im Zuge von zwei Drehschrittbewegungen um jeweils 90 Grad zur Entladeposition 16. Mit dem Eintreffen des Ladeschlittens 20 mit dem daran angeordneten Werkstückhalter 21 und dem daran aufgenommenen Werkstück 5 an der Entladeposition 16 erfolgt automatisiert ein Eingriff des Auslegers 51 in die Ausnehmung 23 des Ladeschlittens 20, so dass eine formschlüssige Kopplung zwischen Ausleger 51 und Ladeschlitten 20 gegeben ist. Ferner erfolgt zu diesem Zeitpunkt eine Druckbeaufschlagung an den Aktor 44 im Ladeschlitten 20, so dass der Werkstückhalter 21 mit den daran aufgenommenen Werkstück 5 aus der ersten Funktionsstellung in die zweite Funktionsstellung überführt wird. Hierdurch wird gewährleistet, dass die Rotationssymmetrieachse 12 des Werkstücks 5 koaxial zur Mittelachse 9 des Aufnahmedorns 8 ausgerichtet ist, wodurch ein Aufschiebevorgang des Werkstücks 5 auf den Aufnahmedorn 8 ermöglicht wird. Anschließend erfolgt eine Ansteuerung des Pneumatikzylinders 48, womit die Linearbewegung des Auslegers 51 sowie des damit gekoppelten Ladeschlittens 21 in Richtung des Aufnahmedorns 8 erfolgt. Ergänzend wird eine Ansteuerung des Aktors 62 vorgenommen, um die Druckluftverbindung zwischen dem ersten Kupplungsteil 57 und dem zweiten Kupplungsteil 58 herzustellen und eine Druckluftbeaufschlagung der am Aufnahmedorn 8 ausgebildeten Mündungsöffnungen 24 zu bewirken.

Im Zuge des Aufschiebevorgangs für das Werkstück 5 auf den Aufnahmedorn 8, der durch die Bewegung des Auslegers 51 in Richtung des Zylindergehäuses 49 hervorgerufen wird, kann vorgesehen werden, die Unterdruckbeaufschlagung der Kontaktfläche 22 des Werkstückhalters 21 abzuschalten und den Werkstückhalter 21 durch geeignete Ansteuerung des Aktors 44 aus der zweiten Funktionsstellung in die erste Funktionsstellung zu überführen. Dies kann insbesondere zu einem Zeitpunkt erfolgen, zu dem das Werkstück 5 bereits in einer Weise am Aufnahmedorn 8 aufgenommen ist, dass eine zuverlässige Führung für das Werkstück 5 gewährleistet ist. Durch diese Maßnahme werden unerwünschte Relativbewegungen zwischen Werkstück 5 und dem Werkstückhalter 21 vermieden, die gegebenenfalls zu einer Beschädigung der Außenoberfläche 17 des Werkstücks 5 führen könnten. Sobald das Werkstück 5 auf den Aufnahmedorn 8 aufgeschoben ist, erfolgt zum einen eine Abschaltung der Druckluftversorgung für den Aufnahmedorn 8, was beispielsweise durch eine entsprechende Ansteuerung des Aktors 62 und eine Trennung des zweiten Kupplungsteil des 58 vom ersten Kupplungsteil 57 hervorgerufen werden kann. Zum anderen erfolgt eine Ausschubbewegung für die Kolbenstange 50 des Pneumatikzylinders 48, so dass der Ladeschlitten 20 in die Ausgangsstellung gemäß der Figur 2 zurückkehren kann, in der der Führungszapfen 42 des Ladeschlittens 20 derart gegenüber der Führungskulisse 40 angeordnet ist, dass bei einer nachfolgenden Drehschrittbewegung des Werkstückrundtischs 4 gegenüber dem Lagerzapfen 30 und der daran fest angebrachten Führungskulisse 40 die gewünschte formschlüssige Verriegelung in axialer Richtung für den Ladeschlitten 20 gewährleistet ist.

## Patentansprüche

1. Transporteinrichtung (1) zum Transportieren von kreiszylindrisch profilierten Werkstücken (5), mit einer drehbeweglich um eine Rotationsachse (10) an einem Lagerzapfen (30) gelagerten Ladetrommel (2), die an einer Außenoberfläche mit mehreren Ladeschlitten (20) versehen ist, wobei jeder Ladeschlitten (20) linearbeweglich längs der Rotationsachse (10) an der Außenoberfläche aufgenommen ist und einen Werkstückhalter (21) mit einer, insbesondere kreisabschnittsförmig, längs der Rotationsachse profilierten Vertiefung (14) aufweist, wobei Profilachsen der Vertiefungen (19) jeweils einen koaxial zur Rotationsachse (10) angeordneten Umkreis schneiden, wobei benachbart zur Ladetrommel ein Transportsystem angeordnet ist,
wobei das Transportsystem als Werkstückrundtisch (4) ausgebildet ist, der drehbeweglich um eine Drehachse (11) an einem Maschinengestell (25) gelagert ist und der an einer Vorderseite (55) mehrere, insbesondere in gleicher Teilung auf einem koaxial zur Drehachse (11) angeordneten Teilkreis angeordnete, Aufnahmedorne (8) aufweist, wobei wenigstens einem Aufnahmedorn (8) eine Düseneinrichtung (24) zur Bereitstellung von Druckluft an einer Oberfläche des Aufnahmedorns (8) zugeordnet ist,
dadurch gekkennzeichnet, dass
der Werkstückhalter (21) entlang einer quer zur Rotationsachse (10) ausgerichteten Radialrichtung zwischen einer radial innenliegenden ersten Funktionsstellung und einer radial außenliegenden zweiten Funktionsstellung linearbeweglich am Ladeschlitten (20) aufgenommen ist, und dadurch, dass an einer der Vorderseite (55) abgewandten Rückseite (56) des Werkstückrundtischs (4) ein erstes Kupplungsteil (57) einer Druckluftkupplung angeordnet ist, das über eine Druckluftleitung mit der Düseneinrichtung (24) verbunden ist und wobei am Maschinengestell (25) ein Aktor (62) angebracht ist, der ein Aktorgehäuse (63) und ein linearbeweglich am Aktorgehäuse (63) gelagertes Aktorelement (64) aufweist, wobei eine Bewegungsachse des Aktorelements (64) parallel zur Rotationsachse (10) ausgerichtet ist und wobei am Aktorelement (64) ein zweites Kupplungsteil (58) der Druckluftkupplung angeordnet ist, das mit einer Druckluftquelle verbindbar ist und das in einer Funktionsposition für eine Druckluftverbindung mit der Düseneinrichtung (24) ausgebildet ist.

2. Transporteinrichtung (1) nach Anspruch 1, **dadurch gekennzeichnet, dass** die Ladetrommel (2) an der Außenoberfläche mit mehreren, jeweils parallel zur Rotationsachse (10) ausgerichteten Linearführungen (35) versehen ist und dass die Ladeschlitten (20) den Linearführungen (35) zugeordnet sind.

3. Transporteinrichtung nach Anspruch 1 oder 2, **dadurch gekennzeichnet, dass** dem Ladeschlitten (20) ein Aktor (44), insbesondere ein Pneumatikzylinder oder ein elektrischer Stellantrieb, zugeordnet ist, der zur Einleitung einer, insbesondere in radialer Richtung ausgerichteten, Relativbewegung zwischen Ladeschlitten (20) und Werkstückhalter (21) ausgebildet ist.

4. Transporteinrichtung (1) nach Anspruch 1, 2 oder 3, **dadurch gekennzeichnet, dass** am Lagerzapfen (30), insbesondere in einem von der Ladetrommel (2) begrenzten Innenraum, eine kreisrunde Führungskulisse (40) festgelegt ist, die eine umlaufend zur Rotationsachse (10) ausgerichtete Führungsbahn bestimmt und dass jeder Ladeschlitten (20) einen radial nach innen gerichteten Führungszapfen (42) aufweist, der für einen längs der Rotationsachse (10) formschlüssigen Eingriff in die Führungskulisse (40) ausgebildet ist, wobei die Führungskulisse (40) eine Ausnehmung (43) aufweist, die für eine Entkopplung des Führungszapfens (42) aus der Führungskulisse (40) an einer vorgegebenen Umfangsposition ausgebildet ist.

5. Transporteinrichtung (1) nach einem der Ansprüche 1 bis 4, **dadurch gekennzeichnet, dass** der Lagerzapfen (30) für die Ladetrommel (2) gemeinsam mit einer Aufschiebeeinrichtung (45) an einem Maschinengestell (25) angeordnet ist und dass die Aufschiebeeinrichtung (45) für eine Einleitung einer Linearbewegung längs der Rotationsachse (10) auf jeweils einen Ladeschlitten (20) ausgebildet ist.

6. Transporteinrichtung (1) nach Anspruch 5, **dadurch gekennzeichnet, dass** die Aufschiebeeinrichtung (45) eine Antriebseinrichtung (48), insbesondere einen Pneumatikzylinder oder einen elektrischen Stellantrieb, mit einem Antriebsgehäuse (49) und einem beweglich, insbesondere linearbeweglich, am Antriebsgehäuse (49) gelagerten Stellglied (50) aufweist, wobei am Stellglied (50) ein quer zur Rotationsachse (10) ausgerichteter Ausleger (51) festgelegt ist, der für eine Bewegungskopplung mit dem Ladeschlitten (20) und/oder dem Werkstückhalter (21) und für eine Bewegungseinleitung auf das Werkstück (5) ausgebildet ist.

7. Transporteinrichtung (1) nach einem der vorhergehenden Ansprüche, **dadurch gekennzeichnet, dass** der Ladetrommel (2) eine Druckluftversorgung und/oder eine Stromversorgung und/oder eine Vakuumversorgung für eine Bewegung des Ladeschlittens (20) längs der Rotationsachse (10) und/oder für eine zeitweilige Anhaftung von Werkstücken (5) an den Werkstückhaltern (21) zugeordnet ist.

8. Transporteinrichtung (1) nach einem der vorhergehenden Ansprüche, **dadurch gekennzeichnet, dass** die Aufnahmedorne (8)in gleicher Teilung auf dem koaxial zur Drehachse (11) angeordneten Teilkreis angeordnet sind.

9. Verfahren zum Transportieren von kreiszylindrisch profilierten Werkstücken (5) mit den Schritten: Rotieren einer Ladetrommel (2), die an einer Außenoberfläche mit einem Ladeschlitten (20) versehen ist, um eine Rotationsachse (10) in eine Beladeposition (15) für den Ladeschlitten (20), Bereitstellen eines Werkstücks (5) von einem vorgelagerten Transportsystem (3) an den Ladeschlitten (20) und Anhaften des Werkstücks (5) an einem Werkstückhalter (21) der Ladeschlittens (20), Rotieren der Ladetrommel (2) in eine Entladeposition (16) für den Ladeschlitten (20) und Übergeben des Werkstücks (5) vom Ladeschlitten (20) an ein nachgelagertes Transportsystem (4), wobei der Werkstückhalter (21) beweglich am Ladeschlitten (20) angebracht ist
und wobei das Werkstück (5) an der Entladeposition (16) durch eine Linearbewegung der Ladeschlittens (20) parallel zur Rotationsachse (10) auf einen parallel zur Rotationsachse (10) ausgerichteten Aufnahmedorn (8) eines Werkstückrundtischs (4) aufgeschoben wird, **dadurch gekennzeichnet, dass**
in der Beladeposition (15) und/oder in der Entladeposition (16) eine Relativbewegung des Werkstückhalters (21) in einer quer zur Rotationsachse (10) ausgerichteten Radialrichtung durchgeführt wird, um einen Abstand zwischen Werkstückhalter (21) und Rotationsachse (10) zu verändern,
dass während der Durchführung des Aufschiebevorgangs eine Relativbewegung des Werkstückhalters (21) in der Radialrichtung durchgeführt wird, um den Abstand des Werkstückhalters (21) von der Rotationsachse (10) zu verkleinern und dass während der Durchführung des Aufschiebevorgangs eine Bereitstellung von Druckluft an einer Oberfläche des Aufnahmedorns (8) vorgenommen wird.

10. Verfahren nach Anspruch 9, **dadurch gekennzeichnet, dass** die Relativbewegung des Werkstückhalters (21) in der Radialrichtung zur Verkleinerung des Abstands des Werkstückhalters (21) von der Rotationsachse (10) durchgeführt wird, wenn eine vorgegebene Überdeckung zwischen dem Werkstück (5) und dem Aufnahmedorn (8) vorliegt und/oder dass vor dem Zeitpunkt oder zum Zeitpunkt der Relativbewegung des Werkstückhalters (21) in der Radialrichtung zur Verkleinerung des Abstands des Werkstückhalters (21) von der Rotationsachse (10) eine Bereitstellung von Druckluft an die Werkstückaufnahme (21) vorgenommen wird.

11. Verfahren nach Anspruch 9 oder 10 **dadurch gekennzeichnet, dass** an der Beladeposition (15) für die Aufnahme des Werkstücks (5) in den Werkstückhalter (21) eine erste Relativbewegung des Werkstückhalters (21) in der Radialrichtung durchgeführt wird, um den Abstand des Werkstückhalters (21) von der Rotationsachse (10) zu vergrößern und anschließend eine zweite Relativbewegung des Werkstückhalters (21) in der Radialrichtung durchgeführt wird, um den Abstand des Werkstückhalters (21) von der Rotationsachse (10) zu verkleinern.

## Claims

1. Transport unit (1) for transporting circular cylindrical profiled workpieces (5), comprising a loading drum (2) which is mounted rotatably about an axis of rotation (10) on a bearing journal (30) and which is provided on an outer surface with a plurality of loading slides (20), each loading slide (20) being accommodated on the outer surface of the loading drum such that it can move linearly along the axis of rotation (10) and each loading slide comprising a workpiece holder (21), the workpiece holder is provided with a, in particular partial circular, profiled recess which extends with a profile axis parallel to the axis of rotation, wherein the profile axes of the recesses (19) each intersect a circumference arranged coaxially to the axis of rotation (10), wherein a transport system is located adjacent to the loading drum (2) and wherein the transport system comprises a workpiece rotary table (4) which is mounted on a machine frame (25) so as to be rotatable about an axis of rotation (11) and which is equipped on a front side (55) with a plurality of mandrels (8) which are arranged, in particular at the same pitch on a pitch circle arranged coaxially to the axis of rotation, wherein at least one mandrel (8) comprises a nozzle (24) for providing compressed air at a surface of the mandrel (8), **characterized in that** the workpiece holder (21) is received on the loading slide (20) so as to be linearly movable in a radial direction aligned transversely to the axis of rotation (10) between a radially inner first functional position and a radially outer second functional position and **in that** a first coupling part (57) of a compressed-air coupling is arranged on a rear side (56) of the workpiece rotary table (4) facing away from the front side (55), which coupling part (57) is connected to the nozzle (24) via a compressed-air line, and wherein an actuator (62) is fitted to the machine frame (25) which has an actuator housing (63) and an actuator element (64) which is received in the actuator housing (63) such that it can move linearly, wherein a movement axis of the actuator element (64) is aligned parallel to the rotation axis (10) and wherein a second coupling part (58) of the compressed-air coupling is connected with the actuator element (64), which second coupling part can be connected to a compressed-air source to provide a compressed-air connection to the nozzle in a functional position (24).

2. Transport unit (1) according to claim 1, **characterized in that** the loading drum (2) is provided on the outer surface with a plurality of linear guides (35), each aligned parallel to the axis of rotation (10), and wherein the loading slides (20) are assigned to the linear guides (35).

3. Transport unit (1) according to claim 1 or 2, **characterized in that** the loading slide (20) is assigned an actuator (44), in particular a pneumatic cylinder or an electric actuator, to provide a, in particular in radial direction oriented, relative movement between the loading slide (20) and the workpiece holder (21).

4. Transport unit (1) according to claim 1, 2 or 3, **characterized in that** a circular guide track (40) is fixed to the bearing journal (30), in particular in an interior space limited by the loading drum (2), which guide track (40) determines a guide path aligned circumferentially with respect to the axis of rotation (10) and wherein each loading slide (20) has a guide pin (42) which is directed radially inwardly for a positive engagement with the guide track (40) along the axis of rotation (10), the guide track (40) having a recess (43) for decoupling the guide pin (42) from the guide track (40) at a predetermined circumferential position.

5. Transport unit (1) according to one of the claims 1 to 4, **characterized in that** the bearing journal (30) for the loading drum (2) is arranged together with a push-on device (45) on a machine frame (25) and wherein the push-on device (45) provides a linear movement along the axis of rotation (10) onto a respective loading slide (20).

6. Transport unit (1) according to claim 5, **characterized in that** the push-on device (45) comprises a linear drive (48), in particular a pneumatic cylinder or an electric actuator, with a drive housing (49) and a drive rod (48) which is mounted moveably, in particular linear moveably, in the drive housing (49) and which is connected with an extension arm (51), which is aligned transversely to the axis of rotation (10) and which provides a movement coupling with the loading slide (20) and/or the workpiece holder (21) and the workpiece (5) .

7. Transport unit (1) according to one of the preceding claims, **characterized in that** a compressed air supply and/or a power supply and/or a vacuum supply is assigned to the loading drum (2) for a movement of the loading slide (20) along the axis of rotation (10) and/or for a temporary adhesion of workpieces (5) to the workpiece holders (21).

8. Transport unit (1) according to one of the preceding claims, **characterized in that** the mandrels (8) are arranged at the same pitch on a pitch circle arranged coaxially to the axis of rotation.

9. Method for transporting circular-cylindrical profiled workpieces (5), comprising the steps: rotating a loading drum (2), which is provided with a loading slide (20) on an outer surface, about an axis of rotation (10) into a loading position (15) for the loading slide (20), providing a workpiece (5) from an upstream transport system (3) to the loading slide (20) and adhering the workpiece (5) to a workpiece holder (21) of the loading slide (20), rotating the loading drum (2) into an unloading position (16) for the loading slide (20) and transferring the workpiece (5) from the loading slide (20) to a downstream transport system (4), wherein the workpiece holder (21) is movably mounted on the loading slide (20) and wherein the workpiece (5) is pushed at the unloading position (16) by a linear movement of the loading slide (20) parallel to the axis of rotation (10) onto a mandrel (8) of a workpiece rotary table (4) aligned parallel to the axis of rotation (10), **characterized in that** at the loading position (15) and/or in the unloading position (16) a relative movement of the workpiece holder (21) in the radial direction is carried out in order to change a distance between the workpiece holder (21) and the the axis of rotation (10) and **in that** during the execution of the pushing-on process a relative movement of the workpiece holder (21) in the radial direction is carried out to reduce the distance of the workpiece holder (21) from the axis of rotation (10) and **in that** during the execution of the push-on operation a provision of compressed air is made to a surface of the mandrel (8) .

10. Method according to claim 9 **characterized in that** the relative movement of the workpiece holder (21) in the radial direction is performed for reducing the distance of the workpiece holder (21) from the rotation axis (10), when there is a predetermined overlap between the workpiece (5) and the mandrel (8) and/or wherein compressed air is supplied to the workpiece holder (21) before or at the time of the relative movement of the workpiece holder (21) in the radial direction for reducing the distance of the workpiece holder (21) from the axis of rotation (10).

11. Method according to claim 9 or 10, **characterized in that** at the loading position (15) for receiving the workpiece (5) in the workpiece holder a first relative movement of the workpiece holder (21) in the radial direction is permormed in order to direction in order to increase the distance of the workpiece holder (21) from the axis of rotation (10) and then a second relative movement of the workpiece holder (21) in the radial direction is performed in order to decrease the distance of the workpiece holder (21) from the axis of rotation (10) .

## Revendications

1. Dispositif de transport (1) pour transporter des pièces (5) profilées de manière cylindrique circulaire, avec un tambour de chargement (2) monté mobile en rotation autour d'un axe de rotation (10) sur un tourillon de montage (30), qui est pourvu sur une surface extérieure de plusieurs chariots de chargement (20), dans lequel chaque chariot de chargement (20) est reçu sur la surface extérieure de manière mobile linéairement le long de l'axe de rotation (10) et présente un porte-pièce (21) avec un évidement (14) profilé, en particulier en forme de segment de cercle, le long de l'axe de rotation, dans lequel les axes de profil des évidements (19) coupent respectivement un cercle circonscrit disposé de manière coaxiale par rapport à l'axe de rotation (10),
dans lequel un système de transport est disposé au voisinage du tambour de chargement, dans lequel le système de transport est réalisé en tant que plateau circulaire pour pièces (4), qui est monté mobile en rotation autour d'un axe de rotation (11) sur un bâti de machine (25) et qui présente sur une face avant (55) plusieurs mandrins de réception (8), en particulier disposés de manière équidistante sur un cercle partiel disposé de manière coaxiale par rapport à l'axe de rotation (11), dans lequel un dispositif de buse (24) pour fournir de l'air comprimé sur une surface du mandrin de réception (8) est associé à au moins un mandrin de réception (8),
**caractérisé en ce que**
le porte-pièce (21) est reçu sur le chariot de chargement (20) de manière mobile linéairement le long d'une direction radiale orientée transversalement par rapport à l'axe de rotation (10) entre une première situation fonctionnelle radialement intérieure et une deuxième situation fonctionnelle radialement extérieure, et **caractérisé en ce qu'**une première partie d'accouplement (57) d'un accouplement d'air comprimé, qui est reliée au dispositif de buse (24) par l'intermédiaire d'une conduite d'air comprimé, est disposée sur une face arrière (56) du plateau circulaire pour pièces (4) opposée à la face avant (55), et dans lequel un actionneur (62), qui présente un boîtier d'actionneur (63) et un élément d'actionneur (64) monté de manière mobile linéairement sur le boîtier d'actionneur (63), est placé sur le bâti de machine (25), dans lequel un axe de mouvement de l'élément d'actionneur (64) est orienté parallèlement à l'axe de rotation (10) et dans lequel une deuxième partie d'accouplement (58) de l'accouplement d'air comprimé, qui peut être reliée à une source d'air comprimé et qui est réalisée dans une situation fonctionnelle pour une liaison d'air comprimé avec le dispositif de buse (24), est disposée sur l'élément d'actionneur (64).

2. Dispositif de transport (1) selon la revendication 1, **caractérisé en ce que** le tambour de chargement (2) est pourvu sur la surface extérieure de plusieurs guidages linéaires (35) orientés respectivement parallèlement à l'axe de rotation (10) et que les chariots de chargement (20) sont associés aux guidages linéaires (35).

3. Dispositif de transport selon la revendication 1 ou 2, **caractérisé en ce qu'**un actionneur (44), en particulier un cylindre pneumatique ou un mécanisme de commande électrique, qui est réalisé pour l'application d'un mouvement relatif, en particulier orienté dans la direction radiale, entre le chariot de chargement (20) et le porte-pièce (21), est associé au chariot de chargement (20),

4. Dispositif de transport (1) selon la revendication 1, 2 ou 3, **caractérisé en ce que** sur le tourillon de montage (30), en particulier dans un espace intérieur délimité par le tambour de chargement (2), est fixée une coulisse de guidage (40) circulaire, qui détermine une bande de guidage orientée de manière périphérique par rapport à l'axe de rotation (10) et que chaque chariot de chargement (20) présente un tourillon de guidage (42) dirigé radialement vers l'intérieur, qui est réalisé pour une insertion par coopération de formes le long de l'axe de rotation (10) dans la coulisse de guidage (40), dans lequel la coulisse de guidage (40) présente un évidement (43), qui est réalisé pour un découplage du tourillon de guidage (42) de la coulisse de guidage (40) sur une position périphérique prédéfinie.

5. Dispositif de transport (1) selon l'une quelconque des revendications 1 à 4, **caractérisé en ce que** le tourillon de montage (30) pour le tambour de chargement (2) est disposé conjointement avec un dispositif d'enfoncement (45) sur un bâti de machine (25) et que le dispositif d'enfoncement (45) est réalisé pour une application d'un mouvement linéaire le long de l'axe de rotation (10) sur respectivement un chariot de chargement (20).

6. Dispositif de transport (1) selon la revendication 5, **caractérisé en ce que** le dispositif d'enfoncement (45) présente un dispositif d'entraînement (48), en particulier un cylindre pneumatique ou un mécanisme de commande électrique, avec un carter d'entraînement (49) et un organe de commande (50) monté mobile, en particulier mobile linéairement, sur le carter d'entraînement (49), dans lequel un bras (51) orienté transversalement par rapport à l'axe de rotation (10), qui est réalisé pour un couplage en mouvement avec le chariot de chargement (20) et/ou le porte-pièce (21) et pour une application de mouvement sur la pièce (5), est fixé sur l'organe de commande (50).

7. Dispositif de transport (1) selon l'une quelconque des revendications précédentes, **caractérisé en ce qu'**une alimentation en air comprimé et/ou une alimentation en courant et/ou une alimentation en vide pour un mouvement du chariot de chargement (20) le long de l'axe de rotation (10) et/ou pour une adhérence temporaire de pièces (5) sur les porte-pièce (21) est associée au tambour de chargement (2).

8. Dispositif de transport (1) selon l'une quelconque des revendications précédentes, **caractérisé en ce que** les mandrins de réception (8) sont disposés de manière équidistante sur le cercle partiel disposé de manière coaxiale par rapport à l'axe de rotation (11).

9. Procédé pour transporter des pièces (5) profilées de manière cylindrique circulaire avec les étapes : d'amenée en rotation d'un tambour de chargement (2), qui est pourvu sur une surface extérieure d'un chariot de chargement (20), autour d'un axe de rotation (10) dans une position de chargement (15) pour le chariot de chargement (20), de fourniture d'une pièce (5) par un système de transport (3) monté en amont sur le chariot de chargement (20) et d'adhérence de la pièce (5) sur un porte-pièce (21) du chariot de chargement (20), d'amenée en rotation du tambour de chargement (2) dans une position de déchargement (16) pour le chariot de chargement (20) et de transfert de la pièce (5) à partir du chariot de chargement (20) sur un système de transport (4) monté en aval, dans lequel le porte-pièce (21) est placé mobile sur le chariot de chargement (20)
et dans lequel la pièce (5) sur la position de déchargement (16) est enfoncée par un mouvement linéaire du chariot de chargement (20) parallèle à l'axe de rotation (10) sur un mandrin de réception (8) d'un plateau circulaire pour pièces (4) orienté parallèlement à l'axe de rotation (10),
**caractérisé en ce que**
dans la position de chargement (15) et/ou dans la position de déchargement (16) un mouvement relatif du porte-pièce (21) dans une direction radiale orientée transversalement par rapport à l'axe de rotation (10) est mis en oeuvre, afin de modifier une distance entre le porte-pièce (21) et l'axe de rotation (10), **en ce que**
pendant la mise en oeuvre du processus d'enfoncement un mouvement relatif du porte-pièce (21) dans la direction radiale est mis en oeuvre, afin de réduire la distance du porte-pièce (21) par rapport à l'axe de rotation (10) et **en ce que** pendant la mise en oeuvre du processus d'enfoncement une fourniture d'air comprimé sur une surface du mandrin de réception (8) est réalisée.

10. Procédé selon la revendication 9, **caractérisé en ce que** le mouvement relatif du porte-pièce (21) dans la direction radiale pour réduire la distance du porte-pièce (21) par rapport à l'axe de rotation (10) est mis en oeuvre lorsqu'un chevauchement prédéfini entre la pièce (5) et le mandrin de réception (8) est présent et/ou qu'avant le moment ou au moment du mouvement relatif du porte-pièce (21) dans la direction radiale pour réduire la distance du porte-pièce (21) par rapport à l'axe de rotation (10) une fourniture d'air comprimé sur le logement de pièce (21) est réalisée.

11. Procédé selon la revendication 9 ou 10, **caractérisé en ce que** sur la position de chargement (15) pour la réception de la pièce (5) dans le porte-pièce (21) un premier mouvement relatif du porte-pièce (21) dans la direction radiale est mis en oeuvre, afin d'augmenter la distance du porte-pièce (21) par rapport à l'axe de rotation (10) et ensuite un deuxième mouvement relatif du porte-pièce (21) dans la direction radiale est mis en oeuvre, afin de diminuer la distance du porte-pièce (21) par rapport à l'axe de rotation (10).
